Europäisches Patentamt

European Patent Office

Office européen des brevets

(11) Publication number: **0 170 704**
**A1**

(12) # EUROPEAN PATENT APPLICATION

published in accordance with Art. 158(3) EPC

(21) Application number: **85900732.0**

(22) Date of filing: **10.01.85**

Data of the international appli-
cation taken as a basis:

(86) International application number:
**PCT/JP 85/00007**

(87) International publication number:
**WO 85/03145 (18.07.85 85/16)**

(51) Int. Cl.⁴: **G 05 B 19/403**

(30) Priority: **10.01.84 JP 2516/84**

(43) Date of publication of application: **12.02.86**
**Bulletin 86/7**

(84) Designated Contracting States: **DE FR GB**

(71) Applicant: **FANUC LTD, 3580, Shibokusa Aza-Komanba
Oshino-mura, Minamitsuru-gun Yamanashi 401-05 (JP)**

(72) Inventor: **KISHI, Hajimu Hino Hirayamadai Jutaku 1104,
6-7-8, Asahigaoka Hino-shi, Tokyo 191 (JP)**
Inventor: **MATSUMURA, Teruyuki, 38-8, Matsugaya,
Hachioji-shi Tokyo 192-03 (JP)**

(74) Representative: **Billington, Lawrence Emlyn et al,
HASELTINE LAKE & CO Hazlitt House 28 Southampton
Buildings Chancery Lane, London WC2A 1AT (GB)**

(54) **NUMERICAL CONTROL APPARATUS WITH AUTOMATIC PROGRAMMING FUNCTION.**

(57) An NC apparatus with an automatic programming func-
tion is provided with an automatic programming unit (101)
which executes the automatic programming and an NC unit
(102) which executes NC processing. The apparatus in-
cludes: a nonvolatile memory (102g) which is provided for
only one of the automatic programming unit and the NC unit
to store data, such as a material file and a tooling file,
required for the automatic programming and data required
for the NC processing; a common memory (101e) which can
be accessed by both a processor (101a) in the automatic
programming unit and a processor (102a) in the NC unit; and
a bus changeover controller (101d) which provides bus
changeover control such that a predetermined processor is
able to access the common memory. The unit on the data
transmission side stores data in the common memory
(101e), while the unit on the data reception side reads the
data out of the common memory, so that data transfer is
carried out between the two units.

DESCRIPTION

NC SYSTEM WITH AUTOMATIC PROGRAMMING FUNCTION

Technical Field

This invention relates to an NC system with an automatic programming function. More particularly, the invention relates to an NC system with an automatic programming function wherein either an automatic programming unit or an NC unit is provided with a non-volatile memory for storing data necessary for automatic programming processing and NC processing, the other unit is provided with a common memory (RAM) capable of being accessed by the processors of both units, and the arrangement is such that a data exchange is possible between the automatic programming unit and the NC unit via the common memory.

Background Art

An NC system with an automatic programming function has at least an automatic programming unit for automatically creating NC data, an NC unit for numerically controlling a machine tool based on the NC data, an operator's panel for selecting between an automatic programming mode and an NC mode and for entering data necessary for automatic programming in the automatic programming mode as well as data necessary for NC processing in the NC mode, and a display unit which functions as a terminal of the automatic programming unit in the automatic programming mode and as a terminal of the NC unit in the NC mode.

The automatic programming unit in an NC system with an automatic programming function is arranged so as to be capable of performing automatic programming independently of the NC unit. More specifically, the automatic programming unit is arranged so that automatic programming can be performed by using the operator's panel and display unit when in the automatic programming mode, even if the NC unit is performing numerical control based on NC data. The single display unit is for common use by both the automatic programming unit and NC unit and can be dedicated solely to the automatic programming unit when the automatic programming mode is established by pressing a FAPT key on the operator's panel. In such case the screen of the display unit displays a picture in conformance with the automatic programming mode. The display unit can be dedicated solely to the NC unit when the NC mode is established by pressing an NC key on the operator's panel, in which case the screen of the display unit displays information requested from among information indicative of the present position of a machine tool, offset quantities, various parameters, the contents of an NC program, the contents of an alarm, and the like.

In the automatic programming mode, an NC tape (part program) is eventually created by successively entering the necessary data while the operator engages in a conversation with messages displayed on the screen of the display unit, with the data being entered in accordance with the following steps:

(1)  drawing format selection step;

(2)  blank profile and blank profile dimensions input step;

(3)  part profile and part profile dimensions input step (profile definition);

(4)  machine reference point and turret position input step;

(5)  machining process selection step;

(6)  tool selection step;

(7)  step for deciding machining limits and cutting conditions conforming to blank material; and

(8)  tool path calculation step.

It should be noted that the machining process refers to machining methods such as outer diameter cutting, inner diameter cutting, end face cutting and drilling, and that cutting conditions refer to clearance quantity, finishing tolerance, depth of cut and cutting velocity.

In order to perform such programming more simply, the automatic programming unit has a non-volatile memory for storing plural sets of material files, plural sets of tooling files, a family program and parameters.  One material file is obtained by creating cutting conditions for each and every machining process for a plurality of workpiece materials, such as aluminum and stainless steel, and assigning a file name to these conditions.  Plural sets of material files obtained by changing the cutting conditions are stored in the non-volatile memory. One tooling file comprises the tool numbers of plural tools to be loaded on a turret at the same time, tool shape data, data indicative of tools mounted on the turret, and the names of the machining processes used. Plural sets of tooling files, which are obtained by suitably changing the combination of tools, are stored in the non-volatile memory. The family program refers to a group of part programs created by automatic programming and stored in the non-volatile memory, each part program having a name assigned thereto.

If material files, tooling files and a family program are thus stored in memory, (a) cutting conditions are decided automatically merely by entering the name of the workpiece material, so that it is unnecessary to enter the cutting conditions one at a time, (b) a desired tool can be selected from among the tools constituting a predetermined tooling file merely by specifying the tooling file, and tool numbers, tool shape data and tool mounting data need not be entered one at a time, and (c) a part program can be called by entering a desired part program name and a new part program can be created in a simple manner merely by modifying, deleting or adding to a portion of the part program called.

Thus, the automatic programming unit has a non-volatile memory for storing material files, tooling files, a family program and parameter.

The NC unit also has a non-volatile memory for storing offset quantities for various tools, parameters and part programs and is arranged so that numerically controlled machining is performed by calling a predetermined part program, offset quantities and parameters from the non-volatile memory.

Thus, in the conventional NC system with an automatic programming function, a non-volatile memory is provided in both the automatic programming unit and NC unit. In consequence, problems result such as high system cost, inefficient utilization of memory and a large space required for mounting.

An object of the present invention is to provide an NC system with an automatic programming function, in which a non-volatile memory is provided only in one or the other of the automatic programming unit and NC unit.

Another object of the present invention is to provide an NC system with an automatic programming function, in which, e.g., the unit not provided with the non-volatile memory is provided with a common memory capable of being accessed by the processors of both units, a bus controller is provided for controlling the connection between both processors and the common memory, and the arrangement is such that data can exchanged between both units through the bus controller and common memory, whereby automatic programming processing and NC processing similar to that of the prior art can be performed even though the non-volatile memory is provided in only one of the units.

Disclosure of the Invention

In an NC system with an automatic programming function in accordance with the present invention, a non-volatile first memory is provided in one of an automatic programming unit and NC unit, data necessary for automatic programming processing and data necessary for NC processing are stored in the non-volatile first memory, a second memory (common memory) capable of being accessed by a processor of the automatic programming unit and processor of the NC unit, and a bus controller for performing bus control in such a manner that a predetermined processor is made capable of accessing the second memory, are provided in, for example, the unit which does not possess the non-volatile first memory, and a data exchange is performed between the NC unit and automatic programming unit via the bus controller and second memory.

Brief Description of the Drawings

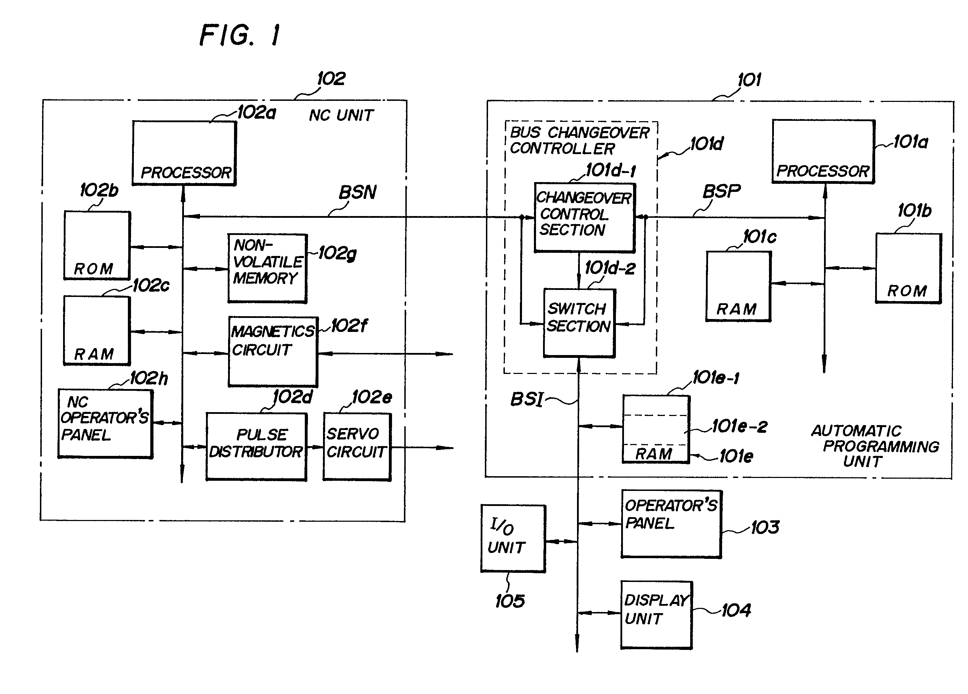

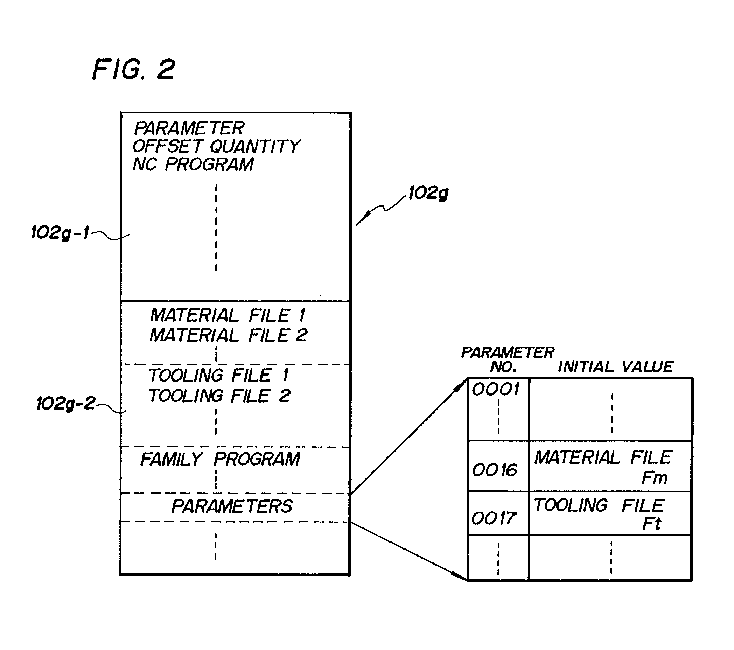

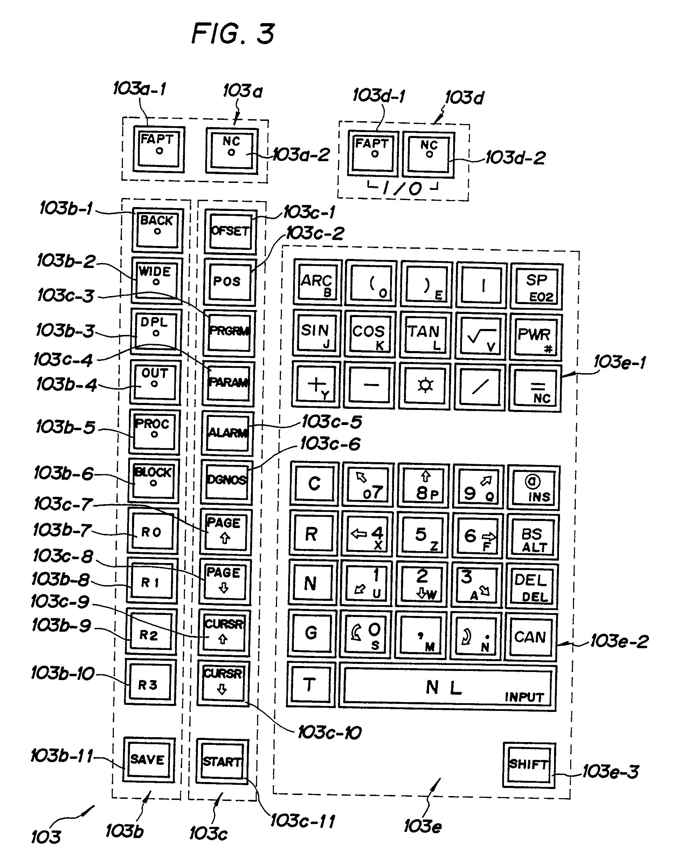

Fig. 1 is a block diagram of an NC system with an automatic programming function according to the present invention, Fig. 2 is a view for describing data stored in a non-volatile memory, Fig. 3 is a view for describing an operator's panel constituting an NC system with an automatic programming function, and Fig.

4 is an illustrative view of a displayed picture for describing the operation of the present invention.

Best Mode for Carrying Out the Invention

Fig. 1 is a block diagram of an NC system with an automatic programming function according to the present invention.

An automatic programming unit 101 has a processor 101a for performing processing such as the creation of NC machining data (part programs), a read-only memory (ROM) 101b that stores a control program for creating NC machining data and for editing display data, a RAM 101c for storing input data, a created NC program, as well as a material file, tooling file, family program and parameters called from a non-volatile memory, described below, a bus controller 101d, and a common memory (RAM) 101e provided so as to be accessable via the bus controller by the processor 101a and a processor inside an NC unit 102.

The NC unit 102 has a processor 102a for performing numerical control based on NC machining data (part program data) and a control program, a read-only memory (ROM) 102b for storing the control program, a RAM 102c for storing the results of numerical control processing, NC machining data and the like, a pulse distributor 102d for executing a well-known pulse distribution calculation upon receiving a position command input thereto, a servo circuit 102e for driving and controlling motors for various axes, a magnetics circuit 102f for delivering M-, S- and T-function instructions to a machine tool when these instructions are read from the NC machining data, and for transmitting relay contact signals, limit signals and the like from the machine tool to the processor 102a, a non-volatile memory 102g, and an NC operator's panel 102h.

In addition to storing offset quantities, various parameters and NC machining data necessary for NC processing, the non-volatile memory 102g stores material files, tooling files, a family program and parameters used in performing automatic programming. Specifically, as shown in Fig. 2, the storage area of the non-volatile memory 102g has an NC data storage area 102g-1 and an automatic programming data storage area 102g-2. The NC data storage area 102g-1 stores offset quantities, various parameters, an NC machining program and the like that are necessary for NC processing, and the automatic programming data storage area 102g-2 stores material files, tooling files, a family program and parameters.

Each parameter for automatic programming is assigned a parameter number. The initial value of a parameter is stored in the data storage area 102g-2 of non-volatile memory 102g in correspondence with the parameter number. As an example, "0016", "0017" are the numbers of parameters specifying a material file and tooling file, respectively, transferred automatically from the non-volatile memory 102g to the RAM 101c after electric power is introduced. In Fig. 2, Fm, Ft are initially set as the material file and tooling file automatically loaded.

The aforementioned common memory 101e is connected to a bus line BSI led out from the bus controller 101d of the automatic programming unit 101. Also connected to this bus line are an operator's panel 103 for data input, a display unit 104 and an I/O unit 105. The operator's panel 103 is for selecting the automatic programming mode or NC mode and for entering data necessary for automatic programming in the automatic programming mode and data necessary for NC processing in the NC mode. The display unit 104 and I/O unit 105 are terminals each of which is shared by the automatic programming unit 101 and NC unit 102. The display unit 104 is for use by the automatic programming unit when the automatic programming mode prevails and for use by the NC unit when the NC mode prevails.

The bus controller 101d is connected to the processor 101a of the automatic programming 101 via a bus line BSP, and to the processor 102a of the NC unit 102 via a bus line BSN.

Fig. 3 is a view showing the arrangement of the operator's panel 103. Classified generally, the operator's panel has:

(a) a one-of-two selection key group 103a for selecting whether the operator's panel 103 is to be used on behalf of the automatic programming unit (referred to as the FAPT mode) or on behalf of the NC unit (referred to as the NC mode);

(b) a key group 103b used for the automatic programming unit;

(c) a key group 103c used for the NC unit;

(d) an I/O selection key group 103d for selectively connecting the I/O unit 105 (Fig. 1) to the automatic programming unit and NC unit; and

(e) a common data input key group 103e used with both the automatic programming unit and NC unit.

The one-of-two selection key group 103a has a FAPT key 103a-1 and an NC key 103a-2, both of which are provided with lamps. Pressing the FAPT key 103a-1 establishes the FAPT mode so that the operator's panel 103 will operate on behalf of the automatic programming unit. In the FAPT mode, the key group 103c will be ineffective even if a key in the group is pressed, and the data input key group 103e for common use will work for the automatic programming unit. On the other hand, pressing the NC key 103a-2 establishes the NC mode, allowing the operator's panel 103 to work on behalf of the NC unit. Now the key group 103b will be ineffective even if these keys are pressed, and the data input key group 103e will operate in conjunction with the NC unit.

The key group 103b for automatic programming includes state setting keys 103b-1 through 103b-6 for setting a variety of states in automatic programming, work designating keys 103b-7 through 103b-10, and a transfer key 103b-11 for transferring NC data from the automatic programming unit to the NC unit.

The key group 103c for the NC unit includes various function keys 103c-1 through 103c-6, keys 103c-7, 103c-8 for turning the page of the display screen, keys 103c-9, 103c-10 for moving a cursor, and a start key 103c-11 for starting NC control on the basis of created NC data. An OFSET key 103c-1 is used to display and set an offset quantity, a POS key 103d-2 is used to display present position, a PRGRM key 103c-3 is employed to display the contents of a program or the block currently being executed as well as the next block, a PARAM key 103c-4 finds use in displaying and setting parameters, and an ALAM key 103c-5 is used to display the contents of an alarm.

The I/O selection key group 103d, which is effective in both the FAPT and NC modes, includes a FAPT key 103d-1 for connecting the data input/output unit (I/O unit) to the automatic programming unit, and an NC key 101d-2 for connecting the data input/output unit to the NC unit.

The key group 103e for data input includes a key group 103e-1 for executing arithmetic operations and function operations, a symbolic key group 103e-2 used in entering part profiles, numerical values and alphabetic characters, and a shift key 103e-3 pressed when entering the alphabetic character indicated at the lower right of each keytop. The symbolic keys function to enter profiles or numerical values, depending upon the automatic programming step.

The operation of the NC system with an automatic programming according to the present invention will be described next. We shall assume that the various data mentioned above have already been stored in the non-volatile memory 102g.

(1) The processor 102a (or the processor 101a) of the NC unit 101 transmits a initial setting signal to the bus controller 101d in response to the introduction of electric power. In response, a changeover control section 101d-1 connects the bus line BSN and the bus line BSI together via a switch section 101d-2.

(2) Next, the processor 102a reads out all of the parameters stored in the data storage area 102g-2 of the non-volatile memory 102g and transfers the parameters to a file storage area 101e-2 of the common memory 101e provided in the automatic programming unit 101. After the transfer, the processor 102a controls the changeover control section 101d-1 to connect the bus line BSI to the bus line BSP.

(3) Thereafter, the processor 101a of the automatic programming unit 101 stores all of the parameters recorded in the file storage area 101e-2 to the RAM 101c.

(4) The processor 101a then checks whether a material file is specified by the parameter of parameter number "0016".

(5) If the material file is specified, the processor 101a writes the material file name (Fm) into a file request area 101e-1 of the common memory 101e and controls the changeover control section 101d-1 to connect the bus line BSI to the bus line BSN.

(6) The processor 102a of NC unit 102 reads the material file name stored in the file request area 101e-1, reads the material file designated by the material file name out of the data storeage area 102g-2 of non-volatile memory 102g and transfers the material file to the file storage area 101e-2 of common memory 101e. After the transfer, the processor 102a controls the changeover control section 101d-1 to connect the bus line BSI to the bus line BSP.

(7) Thereafter, the processor 101a of the automatic programming unit 101 reads the material file out of the file storage area 101e-2 of common memory 101e and stores the material file in the RAM 101c.

(8) Thus, the material file set by the parameter is stored in the RAM 101c. Thereafter, or if a material file is not specified by the parameter at step (4) (i.e., if no material file is defined), the processor 101a checks whether a tooling file is specified by the parameter of parameter number "0017".

(9) If the tooling file is specified, the processor 101a writes the tooling file name (Ft) into the file request area 101e-1 and controls the changeover control section 101d-1 to connect the bus line BSI to the bus line BSN.

(10) The processor 102a of NC unit 102 reads the tooling file name stored in the request area 101e-1, reads the tooling file designated by the tooling file name out of the data storeage area 102g-2 of non-volatile memory 102g, transfers the tooling file to the file storage area 101e-2 and, after the transfer, controls the changeover control section 101d-1 to connect the bus line BSI to the bus line BSP.

(11) Thereafter, the processor 101a of the automatic programming unit 101 reads the tooling file out of the file storage area 101e-2 of common memory 101e and stores the tooling file in the RAM 101c.

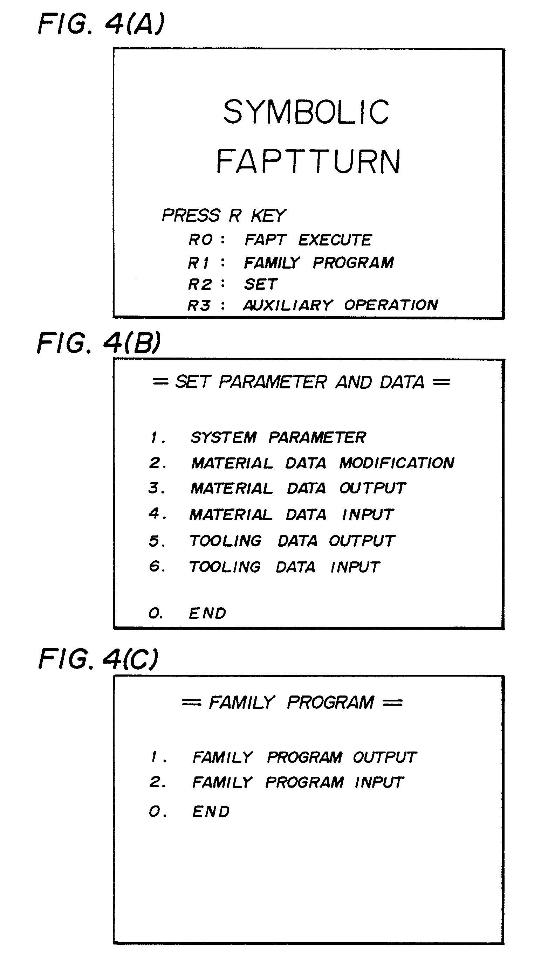

(12) Thus, the tooling file set by the parameter is stored in the RAM 101c. Thereafter, or if a tooling file is not specified by the parameter at step (8) (i.e., if no tooling file is defined), the processor 101a causes the display unit 104 to display the initial picture shown in Fig. 4(A).

In the case described above, the file set by the parameter is automatically loaded from the non-volatile memory 102g to the RAM 101c after the introduction of power. However, in state where the initial picture shown in Fig. 4(A) is being displayed, a desired material file, tool file and part program can be read into the RAM 101c by a manual operation. The manual loading operation will now be described.

(1)  In a state where the initial picture is being displayed, an R2 key (103b-9) on the operator's panel 103 is pressed to select the "SET" item. As a result, "SET PARAMETER AND DATA", shown in Fig. 4(B), is displayed on the screen of the display unit 104.

(2)  When it is desired to call a predetermined material file from the non-volatile memory 102g, the "4" key and NL key (data input key) on the operator's panel 103 are pressed to select the item "MATERIAL DATA INPUT". When it is desired to call a tooling file, the "6" key and NL key are pressed to select the item "TOOLING DATA INPUT".

(3)  Thereafter, the file name is entered from the operator's panel 103 and, finally, the NL key is pressed, whereupon the processor 101a stores these file request data in the file request area 101e-1 of the common memory 101e and connects the bus line BSI to the bus line BSN via the changeover control section 101d-1.

(4)  The processor 102a on the side of the NC unit 102 reads and decodes the information stored in the file request area 101e-1 of common memory 101e at a predetermined period, so that the file request data stored in the file request area 101e-1 are immediatedly accepted by the processor 102a.

(5)  Using the file name contained in the file request data as a key, the processor 102a reads the predetermined file out of the data storage area 102g-2 of the non-volatile memory 102g, stores the file in the file storage area 101e-2 of the common memory 101e and connects the bus lines BSI, BSP together via the changeover control section 101d-1.

(6) Thereafter, the processor 101a of the automatic programming unit 101 successively reads the file out of the common memory 101e, stores it in the RAM 101c and then displays the initial picture on the display unit 104 to end the processing for calling the file requested.

(7) This is followed by executing similar processing for all necessary files. In calling a family program, an Rl key (103b-8) on the operator's panel 103 is pressed when the initial picture is being displayed on the display unit 104, thereby selecting the "FAMILY PROGRAM" item. "FAMILY PROGRAM" shown in Fig. 4(C) is displayed on the display screen by pressing the Rl key. Next, the "2" key and NL key are pressed to select "FAMILY PROGRAM INPUT". Thereafter, the name of the program is entered in the same manner that a file is called, followed by finally pressing the NL key. When this is done, a predetermined part program is stored in RAM 101c in the same manner that a file is called.

When all necessary files, part programs and parameters have been read out, the initial picture is displayed on the display unit 104. If an R0 key (103b-7) on the operator's panel 103 is then pressed to select the item "FAPT EXECUTE", this makes it possible to subsequently execute automatic programming just an in a conventional system.

To execute NC processing, the NC key (103a-2) on the operator's panel 103 is pressed. When this is done, the processor 101a connects the bus lines BSI, BSN together via the changeover control section 101d-1. As a result, the operator's panel 103 and display unit 104 are dedicated to the NC unit, after which the NC unit 102 performs NC processing just as in the conventional system. Note that when the FAPT key (103a-1) on the operator's panel 103 is pressed when the NC mode prevails, the processor 102a of the NC unit 102 connects the bus lines BSI, BSP together via the changeover control section 101d-1 to dedicate the operator's panel 103 and display unit 104 to the automatic programming unit. Accordingly, the automatic programming unit 101 is capable of automatic programming even during NC operation.

In the above case, a predetermined file and part program are called from the non-volatile memory 102g. However, a file or part program created anew and stored in the RAM 101c can also be registered in the non-volatile memory 102g. Such registration processing takes place through the following sequence:

(1) The FAPT key is pressed to establish the automatic programming mode and cause the initial picture to be displayed on the display unit 104.

(2) To register a part program (which has been stored in RAM 101c) in the non-volatile memory 102g in this state, an R1 key (103b-8) on the operator's panel is pressed. Note that the R2 key (103b-9) is pressed if a material file, tooling file and parameter are to be registered in the non-volatile memory 102g. Let us assume that a part program is to be registered hereafter.

(3) When the R1 key is pressed, the picture shown in Fig. 4(C) is displayed on the display unit 104. Next, the "1" key and NL key are pressed to select the "FAMILY PROGRAM OUTPUT" item, after which the part program name is entered and the NL key pressed.

(4) In response to operation of the above keys, the processor 101a stores these registration request data in the file request area 101e-1 of the common memory 101e, transfers the part program stored in RAM 101c to the file storage area 101e-2 of common memory 101e, and connects the bus lines BSI, BSN together via the changeover control section 101d-1 at the completion of the transfer.

(5) The processor 102a of the NC unit 102 reads and decodes the information stored in the file request area 101e-1 of common memory 101e and thereafter stores the part program, which has been stored in the file storage area 101e-2, in a part program storage area of the non-volatile memory 102g.

(6) When processing for storing the part program in the non-volatile memory 102g ends, the processor 102a connects the bus lines BSI, BSP together via the changeover control section 101d-1, and the processor 101a displays the initial picture on the display unit 104 to end file registration processing.

In registering a material file or tooling file, pressing the R2 key (103b-9) when the initial picture is being displayed on the display unit 104 selects the "SET" item. As a result, the picture "SET PARAMETER AND DATA" shown in Fig. 4(B) is displayed on the display unit 104. Accordingly, when a material file is registered, the "3" key and NL key are pressed to select and enter the item "MATERIAL DATA OUTPUT", and when a tooling file is registered, the "5" key and NL key are pressed to select and enter the item "TOOLING DATA OUTPUT". Thereafter, when a file name is entered, just as in the case of a family program, the file stored in the RAM 101c is planted in the non-volatile memory 102g.

In the case described hereinabove, the non-volatile memory 102g is provided in the NC unit and the bus control section 101d and common memory 101e are provided in the automatic programming unit. However, the present invention is not limited to such an arrangement, for these can be provided in either of the units as desired.

According to the present invention as described above, a non-volatile memory is provided solely in an automatic programming unit or NC unit, a common memory capable of being accessed by the processors of both units, and a bus controller for controlling the connection between both processors and the common memory, are provided in, for example, the unit which is not provided with the non-volatile memory, and the arrangement is such that a data exchange can be performed between both units via the bus controller and common memory. Therefore, automatic programming processing and NC processing similar to that of such conventional processing can be performed even though the non-volatile memory is provided in only one of the units. This makes it possible to lower cost, utilize memory effectively and conserve mounting space.

-21-    0170704

CLAIMS:

1.  An NC system with an automatic programming function having an automatic programming unit for executing automatic programming processing and an NC unit for executing NC processing, characterized by having a non-volatile memory provided only in one or the other of the automatic programming unit and NC unit for storing data necessary for automatic programming processing and data necessary for NC processing, a common memory capable of being accessed by a processor of the automatic programming unit and processor of the NC unit, and a bus controller for executing bus changeover control in such a manner that a predetermined processor is made to access said common memory, wherein whichever unit is on a data transmission side stores data in said common memory, and whichever unit is on a data reception side reads said data out of said common memory.

2.  An NC system with an automatic programming function according to claim 1, characterized in that said non-volatile memory is provided on said NC unit, and said common memory and bus controller are provided on said automatic programming unit.

3.  An NC system with an automatic programming function according to claim 1, characterized in the said bus controller responds to a request by connecting together a bus line to which a predetermined processor is connected and a bus line to which the common memory is connected.

4.    An NC system with an automatic programming function according to claim 3, characterized in that at least an operator's panel and display unit used in common by said NC unit and automatic programming unit are connected to the bus line to which the common memory is connected.

5.    An NC system with an automatic programming function according to claim 3, characterized in that data necessary for said automatic programming processing are a material file, tooling file, parameters and a family program.

6.    An NC system with an automatic programming function according to claim 5, characterized in that a predetermined material file name and a predetermined tooling file name are specified in advance by parameters, and said specified material file and specified tooling file are automatically transferred from said non-volatile memory to a RAM inside the automatic programming unit by introducing electric power to the system.

FIG. 1

## FIG. 2

PARAMETER
OFFSET QUANTITY
NC PROGRAM

102g-1

102g

MATERIAL FILE 1
MATERIAL FILE 2

TOOLING FILE 1
TOOLING FILE 2

102g-2

FAMILY PROGRAM

PARAMETERS

| PARAMETER NO. | INITIAL VALUE |
|---------------|---------------|
| 0001 | |
| 0016 | MATERIAL FILE Fm |
| 0017 | TOOLING FILE Ft |
| | |

0170704

## FIG. 3

0170704

## FIG. 4(A)

```
┌─────────────────────────────────────┐
│                                     │
│            SYMBOLIC                  │
│            FAPTTURN                  │
│                                     │
│   PRESS R KEY                        │
│        RO :  FAPT EXECUTE            │
│        R1 :  FAMILY PROGRAM          │
│        R2 :  SET                     │
│        R3 :  AUXILIARY OPERATION     │
└─────────────────────────────────────┘
```

## FIG. 4(B)

```
┌─────────────────────────────────────┐
│    = SET PARAMETER AND DATA =        │
│                                     │
│    1.   SYSTEM PARAMETER             │
│    2.   MATERIAL DATA MODIFICATION   │
│    3.   MATERIAL DATA OUTPUT         │
│    4.   MATERIAL DATA INPUT          │
│    5.   TOOLING DATA OUTPUT          │
│    6.   TOOLING DATA INPUT           │
│                                     │
│    0.   END                          │
└─────────────────────────────────────┘
```

## FIG. 4(C)

```
┌─────────────────────────────────────┐
│       = FAMILY PROGRAM =             │
│                                     │
│    1.   FAMILY PROGRAM OUTPUT        │
│    2.   FAMILY PROGRAM INPUT         │
│    0.   END                          │
│                                     │
│                                     │
│                                     │
└─────────────────────────────────────┘
```

# INTERNATIONAL SEARCH REPORT

International Application No. PCT/JP85/00007

## I. CLASSIFICATION OF SUBJECT MATTER (if several classification symbols apply, indicate all) [3]

According to International Patent Classification (IPC) or to both National Classification and IPC

Int. Cl[4] $\quad$ G05B 19/403

## II. FIELDS SEARCHED

| | Minimum Documentation Searched [4] | |
|---|---|---|
| Classification System | Classification Symbols | |
| IPC | G05B 19/403, 19/18 | |

Documentation Searched other than Minimum Documentation
to the Extent that such Documents are Included in the Fields Searched [5]

| | | |
|---|---|---|
| Jitsuyo Shinan Koho | 1971 – 1984 | |
| Kokai Jitsuyo Shinan Koho | 1971 – 1984 | |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| A | JP, A, 58-29009 (Fujitsu Fanuc Ltd.) 21 February 1983 (21. 02. 83) Page 2, upper left column to upper right column (Family nashi) | |

* Special categories of cited documents: [16]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| February 18, 1985 (18. 02. 85) | February 25, 1985 (25. 02. 85) |
| International Searching Authority [1] | Signature of Authorized Officer [20] |
| Japanese Patent Office | |

Form PCT/ISA/210 (second sheet) (October 1981)